# EUROPEAN PATENT APPLICATION

(11) **EP 4 664 946 A1**
(43) Date of publication of application: **17.12.2025**
(21) Application number: 23920546.1
(22) Date of filing: 10.02.2023
(51) Int. Cl.: H04W 8/00

(54) **WIRELESS COMMUNICATION METHODS AND APPARATUSES, DEVICE, AND STORAGE MEDIUM**

(71) Applicant: Beijing Xiaomi Mobile Software Co., Ltd., Beijing 100085 (CN)
(72) Inventor: LIU, Jianning, Beijing 100085 (CN)
(74) Representative: Stöckeler, Ferdinand
(86) International application number: PCT/CN2023/075531
(87) International publication number: WO 2024/164339

(57) **Abstract**

Wireless communication methods and apparatuses, a device, and a storage medium, relating to the technical field of communications. A method comprises: a second terminal device sends a first message, and correspondingly, a first terminal device receives the first message sent by the second terminal device (610); and, according to the first message, the first terminal device determines whether the second terminal device can be discovered by means of a U2U relay device (620). A message sent by a terminal device is used for indicating whether the terminal device can be discovered by means of the U2U relay device, such that the U2U relay device can add into a target UE list in a U2U relay scenario the identification information of a terminal device willing to be discovered by means of the U2U relay device, thus helping to improve the success rate and efficiency of connection establishment in the U2U relay scenario.

## Description

### FIELD

The present disclosure relates to the field of communication technologies, and in particular relates to a wireless communication method, a wireless communication apparatus, a device and a storage medium.

### BACKGROUND

UE-to-UE (U2U) relay refers to a relay communication between two user equipment (UEs) via one or more other UEs. For U2U relay communication, further research is needed.

### SUMMARY

Embodiments of the present disclosure provide a wireless communication method, a wireless communication apparatus, a device and a storage medium. The technical solutions are as follows.

According to an aspect of the present disclosure, a wireless communication method is provided, performed by a first terminal, including:
receiving a first message sent by a second terminal; and
determining, according to the first message, whether the second terminal may be discovered via a UE-to-UE (U2U) relay device.

According to an aspect of the present disclosure, a wireless communication method is provided, performed by a second terminal, including:
sending a first message, in which the first message is used to determine whether the second terminal may be discovered via a UE-to-UE (U2U) relay device.

According to an aspect of the present disclosure, a wireless communication apparatus is provided, including:
a receiving module configured to receive a first message sent by a second terminal; and
a processing module configured to determine, according to the first message, whether the second terminal may be discovered via a UE-to-UE (U2U) relay device.

According to an aspect of the present disclosure, a wireless communication apparatus is provided, including:
a sending module configured to send a first message, in which the first message is used to determine whether a second terminal may be discovered via a UE-to-UE (U2U) relay device.

According to an aspect of the present disclosure, a terminal is provided, including: a processor; and a memory, in which the memory is configured to store a computer program, and the processor is configured to execute the computer program to implement the wireless communication method on the first terminal side, or to implement the method wireless communication on the second terminal side.

According to an aspect of the present disclosure, a computer-readable storage medium is provided, in which a computer program is stored in the storage medium, and the computer program is configured to be executed by a processor to implement the wireless communication method on the first terminal side, or to implement the method wireless communication on the second terminal side.

According to an aspect of the present disclosure, a chip is provided, in which the chip includes a programmable logic circuit and/or program indications, and when the chip runs, the chip is configured to implement the wireless communication method on the first terminal side, or to implement the method wireless communication on the second terminal side.

According to an aspect of the present disclosure, a computer program product is provided, in which the computer program product includes a computer program, the computer program is stored in a computer-readable storage medium, and a processor reads and executes the computer program from the computer-readable storage medium to implement the wireless communication method on the first terminal side, or to implement the method wireless communication on the second terminal side.

According to an aspect of the present disclosure, a communication system is provided, including a first terminal and a second terminal, in which the first terminal is configured to perform the wireless communication method on the first terminal side, and the second terminal is configured to perform the method wireless communication on the second terminal side.

The technical solution provided by embodiments of the present disclosure may have the following beneficial effects.

The message sent by the terminal is used to indicate whether the terminal may be discovered via a U2U relay device. In this way, after receiving the message sent by the terminal, a U2U relay device may determine whether the terminal may be discovered via a U2U relay device according to the message. According to the embodiments of the present disclosure, the terminal may clearly express its willingness to be discovered via a U2U relay device, and a U2U relay device may also clearly know whether the terminal is willing to be discovered via a U2U relay device, such that a U2U relay device may add the identification information of the terminal willing to be discovered via a U2U relay device to a target UE list in a U2U relay scenario, which helps to improve the success rate and efficiency of connection establishment in the U2U relay scenario.

### BRIEF DESCRIPTION OF THE DRAWINGS

FIG. 1 is a schematic diagram illustrating a network architecture provided according to an embodiment of the present disclosure;
FIG. 2 is a schematic diagram illustrating a U2U relay scenario provided by an embodiment of the present disclosure;
FIG. 3 is a schematic diagram illustrating a U2N (UE-to-Network) relay scenario provided by an embodiment of the present disclosure;
FIG. 4 is a flow chart illustrating a U2N relay discovery process based on Model B provided by an embodiment of the present disclosure;
FIG. 5 is a flow chart illustrating a U2N relay discovery process based on Model A provided by an embodiment of the present disclosure;
FIG. 6 is a flow chart illustrating a wireless communication method provided according to an embodiment of the present disclosure;
FIG. 7 is a flow chart illustrating a wireless communication method provided according to another embodiment of the present disclosure;
FIG. 8 is a flow chart illustrating a wireless communication method provided according to another embodiment of the present disclosure;
FIG. 9 is a flow chart illustrating a wireless communication method provided according to another embodiment of the present disclosure;
FIG. 10 is a block diagram illustrating a wireless communication apparatus provided according to an embodiment of the present disclosure;
FIG. 11 is a block diagram illustrating a wireless communication apparatus provided according to another embodiment of the present disclosure; and
FIG. 12 is schematic diagram illustrating a terminal provided according to an embodiment of the present disclosure.

### DETAILED DESCRIPTION

In order to clarify the object, technical solution, and advantages of the present disclosure, embodiments of the present disclosure will be further described in detail below with reference to the accompanying drawings.

The network architecture and business scenarios described in embodiments of the present disclosure is for a purpose of more clearly illustrating the technical solution of embodiments of the present disclosure, which does not constitute a limitation on the technical solutions provided by embodiments of the present disclosure. Moreover, it is known by those skilled in the art that the technical solutions provided by embodiments of the present disclosure are also applicable to similar technical problems with the evolution of the network architecture and the emergence of new business scenarios.

The technical solutions of embodiments of the present disclosure may be applied to various communication systems, such as a global system of mobile communication (GSM) system, a code division multiple access (CDMA) system, a wideband code division multiple access (WCDMA) system, a general packet radio service (GPRS), a long term evolution (LTE) system, an advanced long-term evolution (LTE-A) system, a new radio (NR) system, an evolution system of NR system, a LTE-based access to unlicensed spectrum (LTE-U) system, an NR-based access to unlicensed spectrum (NR-U) system, a non-terrestrial communication networks (NTN) system, a universal mobile telecommunications system (UMTS), wireless local area networks (WLAN), a wireless fidelity (WiFi), a 5th-generation (5G) system or other communication systems.

Generally speaking, traditional communication systems support a limited number of connections and are easy to implement. However, with the development of communication technology, mobile communication systems will not only support traditional communications, but will also support, for example, device to device (D2D) communication, machine to machine (M2M) communication, machine type communication (MTC) communication, vehicle to vehicle (V2V) communication, or vehicle to everything (V2X) communication, etc. Embodiments of the present disclosure may also be applied to these communication systems.

The communication system in embodiments of the present disclosure may be applied to a carrier aggregation (CA) scenario, a dual connectivity (DC) scenario, and a standalone (SA) networking scenario.

The communication system in embodiments of the present disclosure may be applied to an unlicensed spectrum, in which the unlicensed spectrum may also be regarded as a shared spectrum; or the communication system in embodiments of the present disclosure may also be applied to an authorized spectrum, in which the authorized spectrum may also be regarded as an unshared spectrum or an exclusive spectrum.

Embodiments of the present disclosure may be applied to a terrestrial networks (TN) system and a non-terrestrial networks (NTN) system.

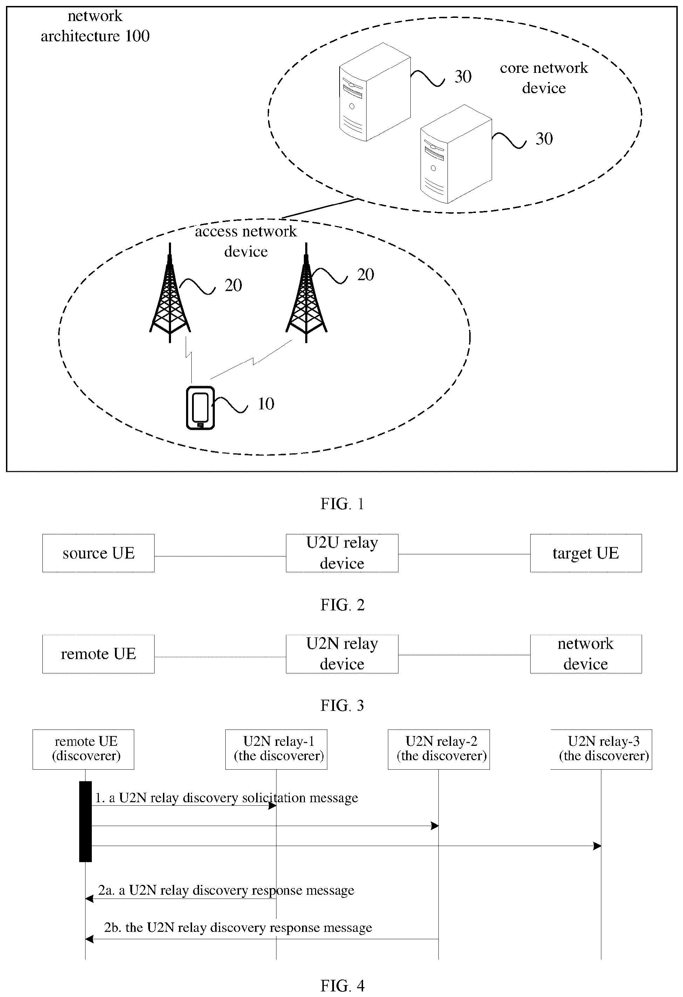

Please refer to FIG. 1, FIG. 1 is a schematic diagram illustrating a network architecture 100 provided according to an embodiment of the present disclosure. The network architecture 100 may include a terminal 10, an access network device 20 and a core network device 30.

The terminal 10 may refer to a user equipment (UE), an access terminal, a subscriber unit, a subscriber station, a mobile station, a mobile station, a remote station, a remote terminal, a mobile device, a wireless communication device, a user agent or a user device. Optionally, the terminal 10 may also be a cellular phone, a cordless phone, a session initiation protocol (SIP) phone, a wireless local loop (WLL) station, personal digital assistant (PDA), a handheld device with wireless communication function, a computing device or other processing devices connected to wireless modems, a vehicle-mounted device, a wearable device, a terminal in 5th generation system (5GS) or a terminal in a future evolved public land mobile network (PLMN) and the like, which are not limited in embodiments of the present disclosure. For the convenience of description, the above devices are collectively referred to as terminals. The number of terminals 10 is usually multiple, and one or more terminals 10 may be distributed in the cell managed by each access network device 20. In embodiments of the present disclosure, "terminal" and "UE" are often used interchangeably, and those skilled in the art will appreciate that the two terms usually express the same meaning.

The access network device 20 is a device deployed in an access network to provide a wireless communication function for the terminal 10. The access network device 20 may include various forms of a macro base station, a micro base station, a relay station, an access point and the like. In a system with different wireless access technologies, the names of devices with access network functions may be different, for example, in a 5G NR system, they may be referred to as gNodeB or gNB. With the evolution of communication technology, the name "access network device" may change. For convenience of description, in embodiments of the present disclosure, the above devices providing wireless communication function for the terminal 10 are collectively referred to as an access network device. Optionally, a communication relationship may be established between the terminal 10 and the core network device 30 through the access network device 20. For example, in an LTE system, the access network device 20 may be an evolved universal terrestrial radio access network (EUTRAN) or one or more eNBs in the EUTRAN. In the 5G NR system, the access network device 20 may be a radio access network (RAN) or one or more GNBs in the RAN. In embodiments of the present disclosure, the "network device" refers to the access network device 20, such as a base station, unless otherwise specified.

The core network device 30 is a device deployed in the core network, and its functions are mainly to provide user connection, user management and service bearing, and to provide an interface to an external network as a bearer network. For example, the core network devices in the 5G NR system may include devices such as an access and mobility management function (AMF) entity, a user plane function (UPF) entity and a session management function (SMF) entity.

In some embodiments, the access network device 20 and the core network device 30 communicate with each other via some radio technology, such as an NG interface in the 5G NR system. The access network device 20 and the terminal 10 communicate with each other via some radio technology, such as a Uu interface.

The "5G NR system" in embodiments of the present disclosure may also be referred to as a 5G system or an NR system, but those skilled in the art may understand its meaning. The technical solution described in embodiments of the present disclosure may be applied to the LTE system, the 5G NR system, a subsequent evolution system of the 5G NR system, and other communication systems such as a narrow band internet of things (NB-IoT) system, which is not limited by the present disclosure.

Before introducing the technical solution of the present disclosure, some relevant technical knowledge involved in the present disclosure is first introduced and explained. The following related technologies may be arbitrarily combined with the technical solutions of embodiments of the present disclosure as optional solutions, which all belong to the protection scope of embodiments of the present disclosure.

### 1. U2U relay

As shown in FIG. 2, in a U2U relay scenario, a source UE communicates with a target UE via a UE-to-UE (U2U) relay device. A U2U relay device may be a UE.

Moreover, there are may be one or more U2U relay devices.

For example, in a case where the source UE communicates with the target UE via one U2U relay device, the relay communication between the source UE and the target UE may be referred to as a single-hop U2U relay communication.

For example, in a case where the source UE communicates with the target UE via multiple U2U relay devices, the relay communication between the source UE and the target UE may be referred to as a multi-hop U2U relay communication. The above multiple U2U relay devices are connected one by one in sequence. For example, the source UE is connected to a first U2U relay device, the first U2U relay device is connected to a second U2U relay device, and the second U2U relay device is connected to the target UE, thereby achieving a two-hop U2U relay communication between the source UE and the target UE.

### 2. U2N relay

As shown in FIG. 3, in a U2N relay scenario, a remote UE communicates with a network device (such as a base station) via a U2N relay device. A U2N relay device may be a UE.

Moreover, there are may be one or more U2N relay devices.

For example, in a case where the remote UE communicates with the network device via one U2N relay device, the relay communication between the remote UE and the network device may be referred to as a single-hop U2N relay communication.

For example, in a case where the remote UE communicates with the network device via multiple U2N relay devices, the relay communication between the remote UE and the network device may be referred to as a multi-hop U2N relay communication. The above multiple U2N relay devices are connected one by one in sequence. For example, the remote UE is connected to a first U2N relay device, the first U2N relay device is connected to a second U2N relay device, and the second U2N relay device is connected to the network device, thereby achieving a two-hop U2N relay communication between the remote UE and the network device.

### 3. 5G ProSe U2N relay discovery process based on Model B

As shown in FIG. 4, FIG. 4 is a flow chart illustrating a 5G ProSe U2N relay discovery process based on Model B. In FIG. 4, a remote UE and three different U2N relay devices are involved. The three different U2N relay devices are represented by a U2N relay-1, a U2N relay-2 and a U2N relay-3 respectively.

The process may include the following steps:
1. The remote UE sends a U2N relay discovery solicitation message;
2a. The U2N relay-1 sends a U2N relay discovery response message to the remote UE; and
2b. The U2N relay-2 sends the U2N relay discovery response message to the remote UE.

In step 1, a 5G ProSe remote UE sends a 5G ProSe U2N relay discovery solicitation message. The U2N relay discovery solicitation message may be sent in a broadcast form, that is, the 5G ProSe remote UE sends the U2N relay discovery solicitation message to the U2N relay-1, the U2N relay-2 and the U2N relay-3 as shown in FIG. 4 respectively, and each of the devices in the U2N relay-1, the U2N relay-2 and the U2N relay-3 may receive the U2N relay discovery solicitation message. The U2N relay discovery solicitation message may include one or more of: a type of discovery message, discoverer information and a relay service code (RSC). Optionally, the U2N relay discovery solicitation message may also include target information. The discoverer information may be identification information of the remote UE, such as application layer identification information (i.e. User Info ID) of the remote UE. Furthermore, the U2N relay discovery solicitation message is sent using a source layer-2 ID and a destination layer-2 ID. The RSC included in the above U2N relay discovery solicitation message is an RSC associated with a connection service desired by the remote UE.

In step 2 (including steps 2a and 2b), U2N relays (such as the U2N relay-1 and the U2N relay-2 as shown in FIG. 4) that match values of the RSC and the target information (if any) included in the U2N relay discovery solicitation message may respond to the remote UE via the U2N relay discovery response message. That is, U2N relay corresponding to the U2N relay discovery solicitation message may send the U2N relay discovery response message to the remote UE, in which the U2N relay discovery response message may include one or more: the type of discovery message, the discoverer information and the RSC. The discoverer information may be identification information of U2N relay that sends the response message, such as the application layer identification information (i.e. User Info ID) of U2N relay. Furthermore, the U2N relay discovery response message is sent using the source layer-2 ID and the destination layer-2 ID.

Regarding 5G ProSe layer 3 U2N relay, in a case where single-network slice selection assistance information (S-NSSAI) associated with the RSC belongs to an allowed NSSAI of 5G ProSe U2N relay, 5G ProSe U2N relay will only respond to a matching RSC in the U2N relay discovery solicitation message. The remote UE selects suitable U2N relay according to information received in step 2.

### 4. U2U relay discovery process based on Model A

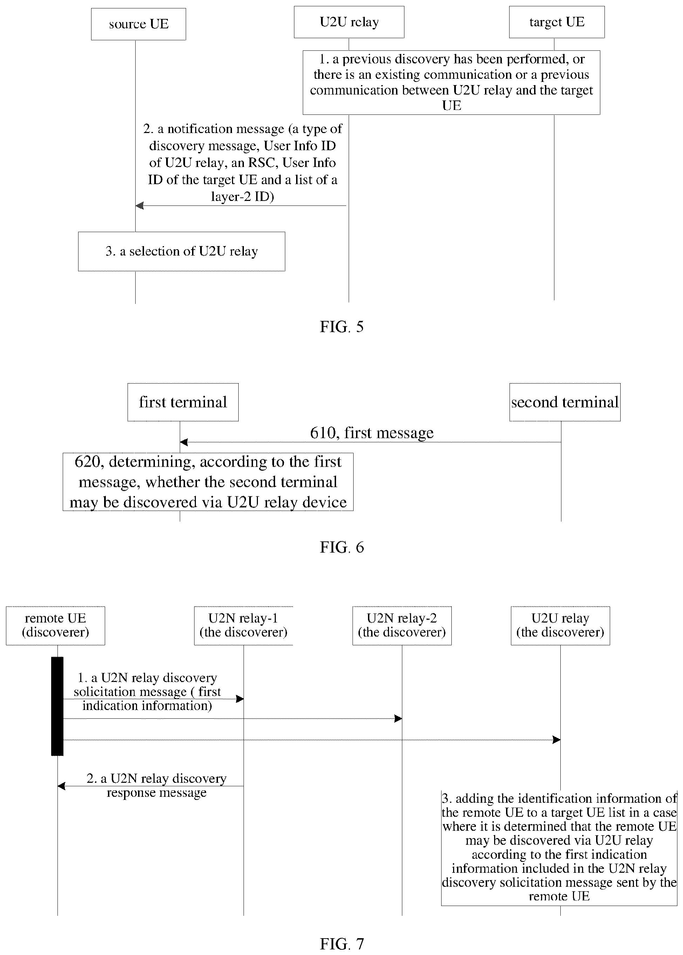

As shown in FIG. 5, FIG. 5 is a flow chart illustrating a U2U relay discovery process based on Model A. In FIG. 5, a source UE, U2U relay and a target UE are shown.

The process may include the following steps.
1. A previous discovery has been performed, or there is an existing communication or a previous communication between U2U relay and the target UE.
2. U2U relay sends a notification message (a type of discovery message, User Info ID of U2U relay, an RSC, User Info ID of the target UE and a list of a layer-2 ID).
3. The source UE performs a selection of U2U relay.

In step 1, U2U relay determines that it may serve as U2U relay according to a configured policy, and U2U relay determines a list of User Info ID and a layer-2 ID of the target UE that it may announce according to the previous discovery or according to the existing or previous communication between U2U relay and the target UE (this list may be referred to as a target UE list). For example, U2U relay may perform a group member discovery procedure (whether Model A or Model B) or a direct discovery procedure (whether Model A or Model B) with the RSC it supports to discover a target UE it may announce.

It should be noted that, in order to maintain the list of target UEs up-to-date, it is desirable that UEs discovered by other UEs via U2U relay periodically perform a discovery procedure or respond to a U2U relay announcement. U2U relay further removes specific target UE information from the target UE list, for example, after the specific target UE information expires.

In step 2, U2U relay periodically sends an announcement message (that is, the U2U relay announcement described above). The announcement message may include one or more of: the type of discovery message, the User Info ID of U2U relay, the RSC, the User Info ID of the target UE and the list of layer-2 ID. A source layer-2 ID of the announcement message is self-assigned by U2U relay, and a destination layer-2 ID is selected according to the configured policy.

In step 3, the source UE monitors the announcement message by using the RSC and the User Info ID of the target UE. The source UE selects U2U relay, and obtains the layer-2 ID of the target UE according to the information received in step 2.

In a U2U relay scenario, a remote UE relies heavily on the target UE list provided by U2U relay in a case of selecting the target UE. Regarding how U2U relay collects the target UE information to generate the above target UE list, it has been described above that there are the following two situations: 1) the UE periodically performs the discovery procedure, and 2) responds to the U2U relay announcement (that is, the announcement message described above). However, performing the discovery procedure periodically between the source UE or the target UE and U2U relay does not mean that the UE necessarily wants to be discovered by other UEs via U2U relay.

For example, in a case where there is frequent data communication between U2U relay and the target UE, but the target UE does not want to be discovered by other UEs via U2U relay, the target UE will be added to the target UE list maintained by U2U relay according to current specifications.

Therefore, a clear indication is needed for the UE to express whether it may be discovered by other UEs via U2U relay. Based on this, in the technical solution provided in the present disclosure, a message sent by a terminal indicates whether the terminal may be discovered via a U2U relay device, such that after a U2U relay device receives the message sent by the terminal, it is possible to determine whether the terminal may be discovered via a U2U relay device according to the message. According to the technical solution of the present disclosure, the terminal may clearly express its willingness to be discovered via a U2U relay device, and a U2U relay device may also clearly know whether the terminal is willing to be discovered via a U2U relay device, such that a U2U relay device may add the identification information of the terminal willing to be discovered via a U2U relay device to the target UE list in the U2U relay scenario, which is helpful to improve the success rate and efficiency of connection establishment in the U2U relay scenario.

Please refer to FIG. 6, FIG. 6 is a flow chart illustrating a wireless communication method provided according to an embodiment of the present disclosure. The method may be applied to any of the network architectures shown in FIG. 1 to FIG. 3. The method may include at least one of the following steps.

In step 610, a second terminal sends a first message; correspondingly, a first terminal receives the first message sent by the second terminal.

In step 620, the first terminal determines, according to the first message, whether the second terminal may be discovered via a U2U relay device.

In embodiments of the present disclosure, the first terminal may be any terminal, the second terminal may also be any terminal, but the first terminal is different from the second terminal. That is to say, the first terminal and the second terminal are two different terminals. Regarding any terminal in a communication system, the terminal may serve as the first terminal in the present disclosure in certain scenarios to perform the steps performed by the first terminal, and the terminal may also serve as the second terminal in the present disclosure in certain scenarios to perform the steps performed by the second terminal. Optionally, the terminal may also serve as the first terminal in certain scenarios to communicate with another terminal that serves as the second terminal, and the terminal may also serve as the second terminal to communicate with another terminal that serves as the first terminal.

For example, regarding any terminal (denoted as a UE 1) in the communication system, the UE 1 may serve as the first terminal in the present disclosure in certain scenarios to perform the steps performed by the first terminal, and to communicate with another terminal (such as a UE 2) that serves as the second terminal; the UE 1 may also serve as the second terminal in the present disclosure in certain scenarios to perform the steps performed by the second terminal, and to communicate with another terminal (such as a UE 3) that serves as the first terminal. Optionally, the UE 1 may also, in certain scenarios, serve as the first terminal to communicate with another terminal (such as the UE 2) that serves as the second terminal, and the UE 1 may also serve as the second terminal to communicate with another terminal (such as the UE 3) that serves as the first terminal.

In some embodiments, the first message may be sent in a broadcast form, a multicast form, or a unicast form, which is not limited in the present disclosure. Furthermore, the first message may be any message sent by the second terminal. For example, the message may be a message defined in an existing standard protocol, or may be a message newly added and extended on the basis of the existing standard protocol.

In some embodiments, an indication information (such as a relay indication) is designed to indicate whether the terminal sending the message may be discovered via a U2U relay device. In this way, after a U2U relay device receives the message sent by the terminal, the U2U relay device may determine whether the terminal sending the message may be discovered via a U2U relay device according to whether the message includes the above indication information or a value of the indication information included in the message.

In some embodiments, the terminal described above (such as the second terminal) may be discovered via a U2U relay device, which may be understood as that the terminal is allowed to be discovered via a U2U relay device, or may be understood as that the terminal is willing to be discovered via a U2U relay device, or may be understood as that the terminal expects to be discovered via U2U a relay device, which is not limited by the present disclosure. Correspondingly, the terminal may not be discovered via a U2U relay device, which may be understood as that the terminal is not allowed to be discovered via a U2U relay device, or may be understood as that the terminal is not willing to be discovered via a U2U relay device, or may be understood as that the terminal does not expect to be discovered via a U2U relay device, which is not limited by the present disclosure. In summary, the second terminal may send the first message to indicate that discovery of the second terminal is possible via a U2U relay device.

In some embodiments, taking the above indication information as first indication information as an example. The second terminal may indicate whether the second terminal may be discovered via a U2U relay device by including or not including the first indication information in the first message sent. Correspondingly, in a case where the first terminal is a U2U relay device, after receiving the first message sent by the second terminal, the first terminal may determine whether the second terminal may be discovered via a U2U relay device according to whether the first message includes first indication information. Optionally, in a case where the second terminal does not send the first message including the first indication information (for example, the first message is not sent, or the first message is sent but does not include the first indication information), it is indicated that the second terminal may not be discovered via a U2U relay device.

In some embodiments, taking the above indication information as the first indication information as an example. The second terminal may indicate whether the second terminal may be discovered via a U2U relay device by including the first indication information in the first message sent and using a value of the first indication information. For example, being discoverable via a U2U relay device and being not discoverable via a U2U relay device correspond to different values of the first indication information. Correspondingly, in a case where the first terminal is a U2U relay device, after receiving the first message sent by the second terminal, the first terminal may determine whether the second terminal may be discovered via a U2U relay device according to the value of the first indication information included in the first message.

In some embodiments, after determining whether the second terminal may be discovered via a U2U relay device, the first terminal determines whether to add identification information of the second terminal to a first list, in which the first list is used to store identification information of a candidate target terminal in a U2U relay scenario. The first list may also be referred to as a target terminal list or a target UE list. For a certain terminal, in a case where the first list includes the identification information of the terminal, it is indicated that the terminal may or is willing to be the candidate target terminal in the U2U relay scenario.

For example, the first terminal is a first U2U relay device, which may be understood as any U2U relay device in the communication system. The first U2U relay device adds the identification information of the second terminal to the first list in a case where it is determined that the second terminal may be discovered via a U2U relay device, in which the first list is used to store the identification information of the candidate target terminal in the U2U relay scenario. Optionally, the first U2U relay device does not add the identification information of the second terminal to the first list in a case where it is determined that the second terminal may not be discovered via a U2U relay device.

In some embodiments, the identification information of the terminal includes an application layer ID and/or a layer 2 ID, in which the application layer ID may be understood as the User Info ID described above. For example, the first U2U relay device adds the User Info ID and/or the layer 2 ID of the second terminal to the target UE list in a case where it is determined that the second terminal may be discovered via a U2U relay device, in which the first list is used to store the identification information of the candidate target UE in the U2U relay scenario. Optionally, the first U2U relay device does not add the User Info ID and/or the layer 2 ID of the second terminal to the target UE list in a case where it is determined that the second terminal may not be discovered via a U2U relay device.

In some embodiments, the first U2U relay device sends an announcement message (that is, the announcement message described above), in which the announcement message may include the first list. Optionally, the notification message sent by first U2U relay includes one or more of: a type of discovery message, User Info ID and an RSC of the first U2U relay device, User Info ID of the target UE and a list of the layer 2 ID (that is, the target UE list). Optionally, a source layer 2 ID of the announcement message is self-assigned by the first U2U relay device, and a destination layer 2 ID is selected according to a configured policy.

According to the technical solution provided by embodiments of the present disclosure, a message sent by a terminal indicates whether the terminal may be discovered via a U2U relay device, such that after a U2U relay device receives the message sent by the terminal, it is possible to determine whether the terminal may be discovered via a U2U relay device according to the message. According to the technical solution of the present disclosure, the terminal may clearly express its willingness to be discovered via a U2U relay device, and a U2U relay device may also clearly know whether the terminal is willing to be discovered via a U2U relay device, such that a U2U relay device may add the identification information of the terminal willing to be discovered via a U2U relay device to the target UE list in the U2U relay scenario, which is helpful to improve the success rate and efficiency of connection establishment in the U2U relay scenario.

Furthermore, an indication information (such as a relay indication) is designed to indicate whether the terminal sending the message may be discovered via a U2U relay device. In this way, after a U2U relay device receives the message sent by the terminal, the U2U relay device may determine whether the terminal sending the message may be discovered via a U2U relay device according to whether the message includes the indication information or a value of the above indication information included in the message.

In the following, a possible implementation of the first message is explained.

In some embodiments, the first message is a U2N relay discovery solicitation message (that is, the U2N relay discovery solicitation message described above), and the U2N relay discovery solicitation message is used to request the discovery of a U2N relay device. For example, the U2N relay discovery solicitation message is sent in the broadcast form. For example, the second terminal sends the U2N relay discovery solicitation message in the broadcast form. Furthermore, regarding information included in the U2N relay discovery solicitation message, please refer to the above description, which will not be repeated here.

In embodiments of the present disclosure, regarding the U2N relay discovery solicitation message sent by the second terminal, it is indicated whether the second terminal may be discovered via a U2U relay device by adding or not adding the first indication information to the U2N relay discovery solicitation message. Optionally, whether the second terminal may be discovered via a U2U relay device may be indicated by adding the first indication information to the U2N relay discovery solicitation message and the value of the first indication information. After receiving the U2N relay discovery solicitation message sent by the second terminal, the first terminal may determine whether the second terminal may be discovered via a U2U relay device according to whether the U2N relay discovery solicitation message includes the first indication information or the value of the first indication information included in the U2N relay discovery solicitation message, and then determine whether to add the identification information of the second terminal to the target UE list.

For example, as shown in FIG. 7, in a 5G ProSe U2N relay discovery process based on Model B, the following steps may be included.
1. A remote UE sends a U2N relay discovery solicitation message, in which the U2N relay discovery solicitation message includes first indication information (such as relay indication) for indicating that the remote UE may be discovered by a U2U relay device.
2. A U2N relay-1 sends a U2N relay discovery response message to the remote UE.
3. In a case where it is determined that the remote UE may be discovered via U2U relay according to the first indication information included in the U2N relay discovery solicitation message sent by the remote UE, U2U relay adds the identification information of the remote UE to a target UE list.

In some embodiments, a first message is a U2N relay discovery response message (that is, the U2N relay discovery response message described above), and the U2N relay discovery response message is used to respond to the U2N relay discovery solicitation message. For example, the U2N relay discovery response message is sent in a broadcast form, or may also be sent in a unicast form. For example, after receiving the U2N relay discovery solicitation message sent by a third terminal, the second terminal sends the U2N relay discovery response message to respond to the third terminal. Optionally, after the second terminal receives the U2N relay discovery solicitation message sent by the third terminal, the second terminal sends the U2N relay discovery response message to respond to the third terminal in a case where the second terminal matches values of an RSC and target information (if any) included in the U2N relay discovery solicitation message. Furthermore, regarding information included in the U2N relay discovery response message, please refer to the above description, which will not be repeated here.

In embodiments of the present disclosure, regarding the U2N relay discovery response message sent by the second terminal, it is indicated whether the second terminal may be discovered via a U2U relay device by adding or not adding the first indication information to the U2N relay discovery response message. Optionally, whether the second terminal may be discovered via a U2U relay device may be indicated by adding the first indication information to the U2N relay discovery response message and a value of the first indication information. After receiving the U2N relay discovery response message sent by the second terminal, the first terminal may determine whether the second terminal may be discovered via a U2U relay device according to whether the U2N relay discovery response message includes the first indication information or the value of the first indication information included in the U2N relay discovery response message, and then determine whether to add identification information of the second terminal to the target UE list.

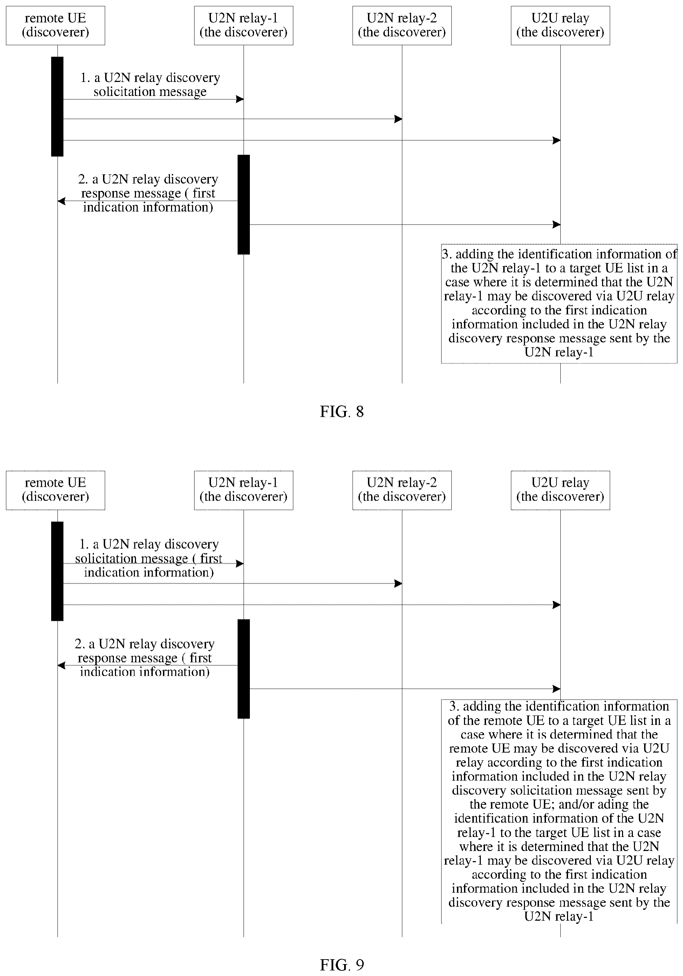

For example, as shown in FIG. 8, in a 5G ProSe U2N relay discovery process based on Model B, the following steps may be included.
1. A remote UE sends a U2N relay discovery solicitation message.
2. A U2N relay-1 sends a U2N relay discovery response message to the remote UE, in which the U2N relay discovery response message includes first indication information (such as relay indication) for indicating that the U2N relay-1 may be discovered via a U2U relay device.
3. In a case where it is determined that the U2N relay-1 may be discovered via U2U relay according to the first indication information included in the U2N relay discovery response message sent by the U2N relay-1, U2U relay adds the identification information of the U2N relay-1 to a target UE list.

For example, as shown in FIG. 9, in a 5G ProSe U2N relay discovery process based on Model B, the following steps may be included.
1. A remote UE sends a U2N relay discovery solicitation message, in which the U2N relay discovery solicitation message includes first indication information (such as relay indication) for indicating that the remote UE may be discovered via a U2U relay device.
2. A U2N relay-1 sends a U2N relay discovery response message to the remote UE, in which the U2N relay discovery response message includes first indication information (such as relay indication) for indicating that the U2N relay-1 may be discovered via a U2U relay device.
3. In a case where it is determined that the remote UE may be discovered via U2U relay according to the first indication information included in the U2N relay discovery solicitation message sent by the remote UE, U2U relay adds the identification information of the remote UE to a target UE list; and/or in a case where it is determined that the U2N relay-1 may be discovered via U2U relay according to the first indication information included in the U2N relay discovery response message sent by the U2N relay-1, U2U relay adds the identification information of the U2N relay-1 to the target UE list.

Optionally, in the flow charts shown in FIGS. 7, 8, and 9 described above, a service authorization procedure may be further included before step 1. Through this service authorization procedure, U2N relay is authorized to perform U2N relay discovery, and a necessary policy and an authorization parameter for the U2N relay discovery are pre-configured in U2N relay. The remote UE is authorized to perform the U2N relay discovery. U2U relay is authorized to perform the U2U relay service and maintain the target UE list that may be discovered via U2U relay.

In embodiments of the present disclosure, regarding the 5G ProSe U2N relay discovery process based on Model B, it is indicated whether the terminal sending the message may be discovered via a U2U relay device by adding or not adding the first indication information in the U2N relay discovery solicitation message and/or the U2N relay discovery solicitation message sent by the terminal, or by using the value of the first indication information added in the U2N relay discovery solicitation message and/or a U2N relay discovery solicitation message sent by the terminal. In this way, a method for updating the target UE list maintained by a U2U relay device according to U2N relay discovery Model B is implemented, such that a U2U relay device may add the identification information of the terminal willing to be discovered via a U2U relay device to the target UE list in the U2U relay scenario, which is helpful to improve the success rate and efficiency of connection establishment in the U2U relay scenario.

In the following, how to use the first indication information to indicate whether the terminal may be discovered via a U2U relay device is explained.

In some embodiments, whether the message sent by the terminal includes the first indication information is used to indicate whether the terminal may be discovered via a U2U relay device.

For example, in a case where the message sent by the second terminal includes the first indication information, the second terminal may be discovered via a U2U relay device; and in a case where the message sent by the second terminal does not include the first indication information, the second terminal may not be discovered via a U2U relay device.

For example, in a case where the message sent by the second terminal includes the first indication information, the second terminal may be discovered via a U2U relay device; and in a case where the message sent by the second terminal does not include the first indication information, the second terminal may not be discovered via a U2U relay device. Correspondingly, after receiving the first message sent by the second terminal, the first terminal determines that the second terminal may be discovered via a U2U relay device in a case where the first message includes the first indication information; and the first terminal determines that the second terminal may not be discovered via a U2U relay device in a case where the first indication information is not included in the first message.

For another example, in a case where the U2N relay discovery solicitation message sent by the second terminal includes the first indication information, the second terminal may be discovered via a U2U relay device; in a case where the U2N relay discovery solicitation message sent by the second terminal does not include the first indication information, the second terminal may not be discovered via a U2U relay device. Correspondingly, after receiving the U2N relay discovery solicitation message sent by the second terminal, the first terminal determines that the second terminal may be discovered via a U2U relay device in a case where the U2N relay discovery solicitation message includes the first indication information; and the first terminal determines that the second terminal may not be discovered via a U2U relay device in a case where the U2N relay discovery solicitation message does not include the first indication information.

For another example, in a case where the U2N relay discovery response message sent by the second terminal includes the first indication information, the second terminal may be discovered via a U2U relay device; in a case where the U2N relay discovery response message sent by the second terminal does not include the first indication information, the second terminal may not be discovered via a U2U relay device. Correspondingly, after receiving the U2N relay discovery response message sent by the second terminal, the first terminal determines that the second terminal may be discovered via a U2U relay device in a case where the U2N relay discovery response message includes the first indication information; and the first terminal determines that the second terminal may not be discovered via a U2U relay device in a case where the U2N relay discovery response message does not include the first indication information.

For example, in a case where the message sent by the second terminal does not include the first indication information, the second terminal may be discovered via a U2U relay device; in a case where the message sent by the second terminal includes the first indication information, the second terminal may not be discovered via a U2U relay device. For example, in a case where the first message sent by the second terminal does not include the first indication information, the second terminal may be discovered via a U2U relay device; in a case where the first message sent by the second terminal includes the first indication information, the second terminal may not be discovered via a U2U relay device. Correspondingly, after receiving the first message sent by the second terminal, the first terminal determines that the second terminal may be discovered via a U2U relay device in a case where the first message includes the first indication information; the first terminal determines that the second terminal may not be discovered through the a U2U relay device in a case where the first message does not include the first indication information.

In this way, it is achieved that whether the message sent by the terminal includes the first indication information to indicate whether the terminal may be discovered via a U2U relay device.

In some embodiments, the value of the first indication information is used to indicate that the second terminal may be discovered via a U2U relay device. That is, the value of the first indication information is used to indicate whether the terminal may be discovered via a U2U relay device. Correspondingly, after receiving the first message including the first indication information sent by the second terminal, the first terminal determines whether the second terminal may be discovered via a U2U relay device according to the value of the first indication information included in the first message.

For example, in a case where the value of the first indication information is a first value, it is indicated that the second terminal may be discovered via a U2U relay device; in a case where the value of the first indication information is a second value, it is indicated that the second terminal may not be discovered via a U2U relay device, in which the first value is different from the second value.

For example, the first value is 1 and the second value is 0. In a case where the value of the first indication information is 1, it is indicated that the second terminal may be discovered via a U2U relay device; in a case where the value of the first indication information is 0, it is indicated that the second terminal may not be discovered via a U2U relay device.

For another example, the first value is 0 and the second value is 1. In a case where the value of the first indication information is 0, it is indicated that the second terminal may be discovered via a U2U relay device; in a case where the value of the first indication information is 1, it is indicated that the second terminal may not be discovered via a U2U relay device.

For another example, the first value is greater than or equal to 1 and the second value is 0. In a case where the value of the first indication information is greater than or equal to 1, it is indicated that the second terminal may be discovered via a U2U relay device; in a case where the value of the first indication information is 0, it is indicated that the second terminal may not be discovered via a U2U relay device.

For another example, in a case where the value of the first indication information is not null, it is indicated that the second terminal may be discovered via a U2U relay device; in a case where the value of the first indication information is null, it is indicated that the second terminal may not be discovered via a U2U relay device.

For another example, in a case where the value of the first indication information is 1, it is indicated that the second terminal may be discovered via a U2U relay device; in a case where the value of the first indication information is null or 0, it is indicated that the second terminal may not be discovered via a U2U relay device.

For another example, in a case where the value of the first indication information is greater than or equal to 1, it is indicated that the second terminal may be discovered via a U2U relay device; in a case where the value of the first indication information is null or 0, it is indicated that the second terminal may not be discovered via a U2U relay device.

It should be noted that the first value and the second value may be specified by a protocol or pre-configured, which is not limited in the present disclosure. Furthermore, the above description of the specific values of the first value and the second value is merely exemplary, and the present disclosure does not limit their specific values. Furthermore, it should be understood that the above description has taken two kinds of values as an example, and it should be understood that the first indication information may include more values. In a case where the first indication information takes one or more values, it is indicated that the second terminal may be discovered via a U2U relay device, and in a case where the first indication information takes other values different from the one or more values, it is indicated that the second terminal may not be discovered via a U2U relay device.

In this way, it is achieved that the value of the first indication information is used to indicate whether the terminal may be discovered via a U2U relay device. The first terminal may receive a signaling including the first indication information sent by the second terminal, and the second terminal may be used to indicate to the first terminal whether the second terminal may be discovered via a U2U relay device via the value of the first indication information.

In some embodiments, the value of the first indication information is further used to indicate a hop count of a U2U relay device through which the second terminal may be discovered. For example, in a case where the first indication information takes different values, the hop count of the U2U relay devices through which the second terminal may be discovered is also different.

For example, in a case where the value of the first indication information is a third value, the second terminal may be discovered via a one-hop U2U relay device; in a case where the value of the first indication information is the fourth value, the second terminal may be discovered via two-hop U2U relay devices, and the third value is different from the fourth value. For example, in a case where the value of the first indication information is 1, the second terminal may be discovered via the one-hop U2U relay device; in a case where the value of the first indication information is 2, the second terminal may be discovered via the two-hop U2U relay devices.

For example, in a case where the value of the first indication information is n, it indicates that the second terminal may be discovered via a n-hop U2U relay devices, where n is a positive integer. For example, in a case where the value of the first indication information is 1, it indicates that the second terminal may be discovered via the one-hop U2U relay device; in a case where the value of the first indication information is 2, the second terminal may be discovered via two-hop U2U relay devices; in a case where the value of the first indication information is 3, the second terminal may be discovered via three-hop U2U relay devices, and so on.

For example, in a case where the value of the first indication information is the third value, it is indicated that the second terminal may be discovered via the one-hop U2U relay device; in a case where the value of the first indication information is the fourth value, it is indicated that the second terminal may be discovered via multi-hop (including two hops or more) U2U relay devices, and the third value is different from the fourth value. For example, in a case where the value of the first indication information is 1, it is indicated that the second terminal may be discovered via the one-hop U2U relay device; in a case where the value of the first indication information is 2, the first indication information indicates that the second terminal may be discovered via the multi-hop (including two hops or more) U2U relay devices. Correspondingly, the second terminal may indicate to the first terminal that the second terminal may be discovered via a U2U relay device with a specified hop count according to the value of the first indication information.

It should be noted that the third value and the fourth value may be specified by a protocol or pre-configured, which is not limited in the present disclosure. Moreover, the above description of the specific values of the third value and the fourth value is merely an example, and the present disclosure does not limit their specific values. Furthermore, it should be understood that the above description has taken two kinds of values as an example, and it should be understood that the first indication information may include more values, and the hop count may be indicated by the value, that is, the specific value corresponds to the specific hop count.

In this way, it is implemented that the hop count of the U2U relay device through which the terminal may be discovered is indicated by the value of the first indication information.

The first terminal may determine its own hop count relative to the second terminal, and add the identification information of the second terminal to a first list in a case where the hop count of the first terminal meets the hop count of the U2U relay device through which the second terminal may be discovered, in which the first list is used to store identification information of a candidate target terminal in a U2U relay scenario. That is, the first terminal may determine whether it may serve as the U2U relay device of the second terminal. In some possible embodiments, the first terminal first determines whether the second terminal may be discovered via a U2U relay device, and then determines the hop count of the U2U relay device that the second terminal may support and the hop count of itself relative to the second terminal in a case where it is determined that the second terminal may be discovered via the U2U relay device. Optionally, the first terminal first determines its own hop count relative to the second terminal, and then determines whether the second terminal may be discovered via a U2U relay device, and determines the hop count of a U2U relay device that the second terminal may support in a case where it is determined that the second terminal may be discovered via a U2U relay device, which is not limited by the present disclosure. Furthermore, the second terminal may explicitly indicate a specific value of the hop count to be supported, or whether or not only single hop or multi-hop is supported by the first indication information.

In some embodiments, the first terminal is a first U2U relay device, and the first U2U relay device may be understood as any U2U relay device in the communication system. The first U2U relay device adds the identification information of the second terminal to the first list in a case where it is determined that the second terminal may be discovered via a U2U relay device, and a hop count of the first U2U relay device meets the hop count of the U2U relay device through which the second terminal may be discovered, in which the first list is used to store the identification information of the candidate target terminal in the U2U relay scenario. Optionally, the first U2U relay device does not add the identification information of the second terminal to the first list in a case where the first U2U relay device determines that the second terminal may not be discovered via a U2U relay device; or the first U2U relay device does not add the identification information of the second terminal to the first list in a case where the hop count of the first U2U relay device does not meet the hop count of the U2U relay device through which the second terminal may be discovered.

For example, the first U2U relay device adds User Info ID and/or a layer 2 ID of the second terminal to the target UE list in a case where it is determined that the second terminal may be discovered via a U2U relay device, and the hop count of the first U2U relay device meets the hop count of the U2U relay device through which the second terminal may be discovered, in which the target UE list is used to store the identification information of the candidate target terminal in the U2U relay scenario. That is, the first U2U relay device updates the target UE list according to the first indication information. Optionally, the first U2U relay device does not add the User Info ID and/or the layer 2 ID of the second terminal to the target UE list in a case where it is determined that the second terminal may not be discovered via a U2U relay device; or the first U2U relay device does not add the User Info ID and/or the layer 2 ID of the second terminal to the target UE list in a case where the hop count of the first U2U relay device does not meet the hop count of the U2U relay device through which the second terminal may be discovered. That is, the target UE list of the first U2U relay device is updated but the target UE list is not updated for the second terminal.

In some embodiments, the hop count of the first U2U relay device meets the hop count of the U2U relay device through which the second terminal may be discovered, which means that the hop count of the first U2U relay device is equal to the hop count of the U2U relay device through which the second terminal may be discovered. The hop count of the first U2U relay device does not meet the hop count of the U2U relay device through which the second terminal may be discovered, which means that the hop count of the first U2U relay device is not equal to the hop count of the U2U relay device through which the second terminal may be discovered. For example, it is assumed that the hop count of the U2U relay device through which the second terminal may be discovered is 1, the above conditions are met in a case where the hop count of the first U2U relay device is also 1; otherwise, in a case where the hop count of the first U2U relay device is not 1, the above conditions are not met.

In some embodiments, the hop count of the first U2U relay device meets the hop count of the U2U relay device through which the second terminal may be discovered, which means that the hop count of the first U2U relay device is less than or equal to the hop count of the U2U relay device through which the second terminal may be discovered. The hop count of the first U2U relay device does not meet the hop count of the U2U relay device through which the second terminal may be discovered, which means that the hop count of the first U2U relay device is greater than the hop count of the U2U relay device through which the second terminal may be discovered. For example, it is assumed that the hop count of the U2U relay device through which the second terminal may be discovered is 2, the above conditions are met in a case where the hop count of the first U2U relay device is 1 or 2; otherwise, in a case where the hop count of the first U2U relay device is greater than 2, the above conditions are not met.

In this way, on the basis of the first indication information indicating whether the terminal may be discovered via a U2U relay device, a judgment condition of the hop count is further added, such that the identification information of the terminal is added to the target UE list only in a case where the hop count of the first U2U relay device meets the hop count of the U2U relay device through which the second terminal may be discovered, thereby better meeting the personalized requirements of the terminal in the U2U relay scenario.

It should be noted that the steps executed by the first terminal in the above method embodiments may be independently implemented as a wireless communication method on the first terminal side, and the steps executed by the second terminal in the above method embodiments may be independently implemented as a wireless communication method on the second terminal side.

The following are device embodiments of the present disclosure, which may be used to execute method embodiments of the present disclosure. For details not disclosed in the device embodiments of the present disclosure, please refer to the method embodiments of the present disclosure.

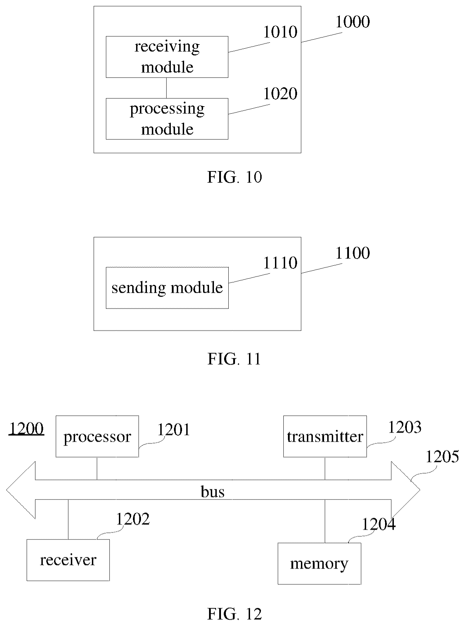

Please refer to FIG. 10, FIG. 10 is a block diagram illustrating a wireless communication apparatus provided according to an embodiment of the present disclosure. The apparatus has the function of implementing the above-mentioned method example on a first terminal side, and the function may be implemented by hardware or by executing corresponding software through hardware. The apparatus may be a first terminal introduced above, or may be arranged in the first terminal. As shown in FIG. 10, the apparatus 1000 may include: a receiving module 1010 and a processing module 1020.

The receiving module 1010 is configured to receive a first message sent by a second terminal.

The processing module 1020 is configured to determine, according to the first message, whether the second terminal may be discovered via a U2U relay device.

In some embodiments, the first message is a U2N relay discovery solicitation message, in which the U2N relay discovery solicitation message is used to request a discovery of a U2N relay device.

In some embodiments, the first message is a U2N relay discovery response message, in which the U2N relay discovery response message is used to respond to the U2N relay discovery solicitation message.

In some embodiments, the processing module 1020 is configured to determine that the second terminal may be discovered via a U2U relay device in a case where the first message includes first indication information; or determine that the second terminal may not be discovered via a U2U relay device in a case where the first message does not include the first indication information.

In some embodiments, the processing module 1020 is configured to determine, according to a value of first indication information included in the first message, whether the second terminal may be discovered via a U2U relay device.

In some embodiments, the value of the first indication information is further used to indicate a hop count of a U2U relay device through which the second terminal may be discovered.

In some embodiments, the first terminal is a first U2U relay device. The processing module 1020 is configured to add identification information of the second terminal to a first list in a case where it is determined that the second terminal may be discovered via a U2U relay device, in which the first list is used to store identification information of a candidate target terminal in a U2U relay scenario.

In some embodiments, the processing module 1020 is configured to not add the identification information of the second terminal to the first list in a case where it is determined that the second terminal may not be discovered via a U2U relay device.

In some embodiments, the first terminal is the first U2U relay device. The processing module 1020 is configured to add identification information of the second terminal to the first list in a case where it is determined that the second terminal may be discovered via a U2U relay device, and a hop count of the first U2U relay device meets the hop count of the U2U relay device through which the second terminal may be discovered, in which the first list is used to store the identification information of the candidate target terminal in the U2U relay scenario.

In some embodiments, the processing module 1020 is configured to not add the identification information of the second terminal to the first list in a case where it is determined that the second terminal may not be discovered via a U2U relay device; or not add the identification information of the second terminal to the first list in a case where the hop count of the first U2U relay device does not meet the hop count of the U2U relay device through which the second terminal may not be discovered. Here, not adding the identification information of the second terminal to the first list may be understood as not processing the identification information of the second terminal, or may be understood as discarding the identification information of the second terminal or the like.

Please refer to FIG. 11, FIG. 11 is a block diagram illustrating a wireless communication apparatus provided according to another embodiment of the present disclosure. The apparatus has the function of implementing the above-mentioned method example on a second terminal side, and the function may be implemented by hardware or by executing corresponding software through hardware. The apparatus may be the second terminal described above, or it may be arranged in a second terminal. As shown in FIG. 11, the apparatus 1100 may include a sending module 1110.

The sending module 1110 is configured to send a first message, in which the first message is used to determine whether the second terminal may be discovered via a U2U relay device.

In some embodiments, the first message is a U2N relay discovery solicitation message, in which the U2N relay discovery solicitation message is used to request a discovery of a U2N relay device.

In some embodiments, the first message is a U2N relay discovery response message, in which the U2N relay discovery response message is used to respond to the U2N relay discovery solicitation message.

In some embodiments, the second terminal may be discovered via a U2U relay device in a case where the first message includes first indication information; or the second terminal may not be discovered via a U2U relay device in a case where the first message does not include the first indication information.

In some embodiments, the first message includes first indication information, and a value of the first indication information is used to indicate whether the second terminal may be discovered via a U2U relay device.

In some embodiments, the value of the first indication information is further used to indicate a hop count of the U2U relay device through which the second terminal may be discovered.

It should be noted that the apparatus provided in the above-mentioned embodiments is merely exemplified by division of the above-mentioned functional modules in a case of realizing the functions thereof. In practical applications, the above functions may be allocated to different functional modules according to needs, that is, an internal structure of the apparatus is divided into different functional modules to perform all or some of the functions described above.

Regarding the apparatus in the above embodiments, a specific implementation process of the apparatus may be found in the method embodiments, which will not be described in detail here.

Please refer to FIG. 12, FIG. 12 is schematic diagram illustrating a terminal provided according to an embodiment of the present disclosure. The terminal 1200 includes: a processor 1201, a receiver 1202, a transmitter 1203, a memory 1204 and a bus 1205. The terminal 1200 may be the first terminal and/or the second terminal described above. The processor 1201 may be used to realize the functions of the processing module, the receiver 1202 may be used to realize the functions of the receiving module, and the transmitter 1203 may be used to realize the functions of the sending module.

The processor 1201 includes one or more processing cores. The processor 1201 executes various functional applications and information processing by running software programs and modules.

The receiver 1202 and transmitter 1203 may be implemented as a communication component, which may be a communication chip.

The memory 1204 is coupled to the processor 1201 via the bus 1205.

The memory 1204 may be used to store at least one program code, and the processor 1201 is used to execute the at least one program code to implement each step in the above method embodiments.

Furthermore, the memory 1204 may be implemented by any type or combination of volatile or non-volatile storage devices including, but not limited to: a magnetic or optical disk, an electrically erasable programmable read-only memory (EEPROM), an erasable programmable read-only memory (EPROM), a static random access memory (SRAM), a read-only memory (ROM), a magnetic memory, a flash memory, and a programmable read-only memory (PROM).

In embodiments of the present disclosure, a computer-readable storage medium is also provided, in which a computer program is stored in the storage medium, and the computer program is configured to be executed by a processor to implement the wireless communication method on the first terminal side, or to implement the method wireless communication on the second terminal side.

Optionally, the computer-readable storage medium may include a read-only memory (ROM), a random-access memory (RAM), solid state drives (SSD), or an optical disk. The random access memory may include a resistance random access memory (ReRAM) and a dynamic random access memory (DRAM).

In embodiments of the present disclosure, a chip is also provided, in which the chip includes a programmable logic circuit and/or program indications, and when the chip runs, the chip is configured to implement the wireless communication method on the first terminal side, or to implement the method wireless communication on the second terminal side.

In embodiments of the present disclosure, a computer program product is provided, in which the computer program product includes a computer program, the computer program is stored in a computer-readable storage medium, and a processor reads and executes the computer program from the computer-readable storage medium to implement the wireless communication method on the first terminal side, or to implement the method wireless communication on the second terminal side.

In embodiments of the present disclosure, a communication system is provided, including a first terminal and a second terminal, in which the first terminal is configured to perform the wireless communication method on the first terminal side, and the second terminal is configured to perform the method wireless communication on the second terminal side.

It should be understood that the term "indication" mentioned in embodiments of the present disclosure may be a direct indication, an indirect indication, or an associated relationship. For example, A indicates B, which may mean that A directly indicates B, for example, B may be obtained by A; which may also mean that A indicates B indirectly, for example, A indicates C, and B may be obtained by C; which may also indicate that there is an association relationship between A and B.

In the description of embodiments of the present disclosure, the term "correspondence" may indicate that there is a direct correspondence or indirect correspondence relationship between the two, may indicate that there is a correlation relationship between the two, or may indicate a relationship between indicating and being indicated, configuring and being configured, or the like.

In some embodiments of the present disclosure, the term "predefined" may be implemented by pre-saving corresponding codes, tables or other methods that can be used to indicate relevant information in a device (for example, including a terminal device and a network device), and the present disclosure does not limit the specific implementation methods thereof. For example, "predefined" may refer to defined in the protocol.

In some embodiments of the present disclosure, the term "protocol" may refer to a standard protocol in the field of communication, and may include, for example, an LTE protocol, an NR protocol, and related protocols applied in future communication systems, which is not limited in the present disclosure.

The term "a plurality" in the present disclosure refers to two or more. The term "And/or", which describes an associated relationship of associated objects, means that there may be three relationships, for example, A and/or B, which may mean that A exists alone, A and B exist at the same time, and B exists alone. A character "/" generally indicates that contextual objects are in an "or" relationship.

Furthermore, the step numbering described herein only illustrates a possible sequence of execution between steps by way of example. In some other embodiments, the above steps may also be executed out of the sequence of numbering, for example, two steps with different numbers are executed simultaneously, or two steps with different numbers are executed in the reverse order as shown in the drawings, which is not limited in embodiments of the present disclosure.

Those skilled in the art shall be aware that in one or more of the examples described above, the functions described in embodiments of the present disclosure may be implemented in hardware, software, firmware, or any combination thereof. When implemented using software, these functions may be stored in a computer readable medium or transmitted as one or more instructions or code on a computer readable medium. Computer-readable media include computer storage media and communication media, in which communication media includes any medium that facilitates transfer of a computer program from one place to another. The storage medium may be any available medium accessible by a general-purpose or special-purpose computer.

The above descriptions are only optional embodiments of the present disclosure, and are not intended to limit the present disclosure. Any modification, equivalent replacement and improvement made within the spirit and principle of the present disclosure shall be included in the scope of the present disclosure.

## Claims

1. A wireless communication method, performed by a first terminal, comprising:
receiving a first message sent by a second terminal; and
determining, according to the first message, whether the second terminal is discoverable via a UE-to-UE (U2U) relay device.

2. The method according to claim 1, wherein the first message is a UE-to-Network (U2N) relay discovery solicitation message, and the U2N relay discovery solicitation message is used to request a discovery of a U2N relay device.

3. The method according to claim 1 or 2, wherein the first message is a U2N relay discovery response message, and the U2N relay discovery response message is used to respond to the U2N relay discovery solicitation message.

4. The method according to any one of claims 1 to 3, wherein determining, according to the first message, whether the second terminal is discoverable via a U2U relay device comprises:
determining that the second terminal is discoverable via a U2U relay device in a case where the first message comprises first indication information; and/or
determining that the second terminal is not discoverable via a U2U relay device in a case where the first message does not comprise the first indication information.

5. The method according to any one of claims 1 to 3, wherein determining, according to the first message, whether the second terminal is discoverable via a U2U relay device comprises:
determining, according to a value of first indication information comprised in the first message, whether the second terminal is discoverable via a U2U relay device.

6. The method according to claim 4 or 5, wherein the value of the first indication information is further used to indicate a hop count of a U2U relay device through which the second terminal is discoverable.

7. The method according to any one of claims 1 to 6, wherein the first terminal is a first U2U relay device, and the method further comprises:
adding, by the first U2U relay device, identification information of the second terminal to a first list in a case where it is determined that the second terminal is discoverable via a U2U relay device, wherein the first list is used to store identification information of a candidate target terminal in a U2U relay scenario.

8. The method according to claim 7, further comprising:
not adding, by the first U2U relay device, the identification information of the second terminal to the first list in a case where it is determined that the second terminal is not discoverable via a U2U relay device.

9. The method according to any one of claims 1 to 6, wherein the first terminal is a first U2U relay device, and the method further comprises:
adding, by the first U2U relay device, identification information of the second terminal to a first list in a case where it is determined that the second terminal is discoverable via a U2U relay device, and a hop count of the first U2U relay device meets the hop count of the U2U relay device through which the second terminal is discoverable, wherein the first list is used to store identification information of a candidate target terminal in a U2U relay scenario.

10. The method according to claim 9, further comprising:
not adding, by the first U2U relay device, the identification information of the second terminal to the first list in a case where it is determined that the second terminal is not discoverable via a U2U relay device; or
not adding, by the first U2U relay device, the identification information of the second terminal to the first list in a case where the hop count of the first U2U relay device does not meet the hop count of the U2U relay device through which the second terminal is discoverable.

11. A wireless communication method, performed by a second terminal, comprising:
sending a first message, wherein the first message is used to determine whether the second terminal is discoverable via a UE-to-UE (U2U) relay device.

12. The method according to claim 11, wherein the first message is a UE-to-Network (U2N) relay discovery solicitation message, and the U2N relay discovery solicitation message is used to request a discovery of a U2N relay device.

13. The method according to claim 11 or 12, wherein the first message is a U2N relay discovery response message, and the U2N relay discovery response message is used to respond to the U2N relay discovery solicitation message.

14. The method according to any one of claims 11 to 13, wherein
the second terminal is discoverable via a U2U relay device in a case where the first message comprises first indication information; and/or
the second terminal is not discoverable via a U2U relay device in a case where the first message does not comprise the first indication information.

15. The method according to any one of claims 11 to 13, wherein the first message comprises first indication information, and a value of the first indication information is used to indicate whether the second terminal is discoverable via a U2U relay device.

16. The method according to claim 14 or 15, wherein the value of the first indication information is further used to indicate a hop count of the U2U relay device through which the second terminal is discoverable.

17. A wireless communication apparatus, comprising:
a receiving module configured to receive a first message sent by a second terminal; and
a processing module configured to determine, according to the first message, whether the second terminal is discoverable via a UE-to-UE (U2U) relay device.

18. A wireless communication apparatus, comprising:
a sending module configured to send a first message, wherein the first message is used to determine whether a second terminal is discoverable via a UE-to-UE (U2U) relay device.

19. A terminal, comprising:
a processor; and
a memory,
wherein the memory is configured to store a computer program, and the processor is configured to execute the computer program to implement the method according to any one of claims 1 to 10, or to implement the method according to any one of claims 11 to 16.

20. A computer-readable storage medium, wherein a computer program is stored in the storage medium, and the computer program is configured to be executed by a processor to implement the method according to any one of claims 1 to 10, or to implement the method according to any one of claims 11 to 16.

21. A chip, wherein the chip comprises a programmable logic circuit and/or program indications, and when the chip runs, the chip is configured to implement the method according to any one of claims 1 to 10, or to implement the method according to any one of claims 11 to 16.

22. A computer program product, wherein the computer program product comprises a computer program, the computer program is stored in a computer-readable storage medium, and a processor reads and executes the computer program from the computer-readable storage medium to implement the method according to any one of claims 1 to 10, or to implement the method according to any one of claims 11 to 16.

23. A communication system comprising a first terminal and a second terminal, wherein the first terminal is configured to perform the method according to any one of claims 1 to 10, and the second terminal is configured to perform the method according to any one of claims 11 to 16.
